# EUROPEAN PATENT SPECIFICATION

(11) **EP 2 236 023 B1**
(45) Date of publication and mention of the grant of the patent: **13.03.2013**
(21) Application number: 10158647.7
(22) Date of filing: 31.03.2010
(51) Int. Cl.: A01K 1/01, A01K 1/015

(54) **Stable with floor element**
Stall mit Bodenelement
Etable avec élément de plancher

(30) Priority: 02.04.2009 NL 2002703
(43) Date of publication of application: 06.10.2010
(73) Proprietor: J.O.Z. B.V., 1617 KK Westwoud (NL)
(72) Inventor: Elling, Rick, 1617 KK, Westwoud (NL)
(74) Representative: Hooiveld, Arjen Jan Winfried

(56) References cited:
- EP-A- 1 886 554
- EP-A- 1 915 903
- NL-A- 8 900 860
- NL-C- 1 003 271
- NL-C- 1 020 139
- US-A1- 2004 025 461

## Description

The present invention relates to a stable comprising an existing stable floor provided with a profile, which profile is at least substantially made up of longitudinally extending parallel slots.

In the Netherlands, current stables usually have a grated floor, a slotted floor or a flat concrete floor. The known grated floor consists of a pre-reinforced concrete slab provided with grate openings, it is supported on upright side walls of a manure pit present thereunder, with the manure produced by the cattle falling into the manure pit through the openings. Drawbacks of such a grated floor include the fact that the manure pit is a major source of ammonia emission and that the floor becomes slippery, which may lead to animals losing their footing and injuring themselves.

To reduce the emission of ammonia, a closed slotted floor is already being used. Such a slotted floor is known, for example from Dutch patent publication No. 1003271 (IMAG-DLO) . The known slotted floor consists of elongate floor slabs, whose upper surface is provided with a profile in the form of slots extending parallel to each other. Said slots function on the one hand to provide the cattle present on the floor with a better grip and on the other hand to drain urine and liquid manure from the cattle. The slots of adjacent slabs are in line. The floor slabs are supported with their short sides on upright side walls of the manure pit and are spaced from each other along their long sides so as to form a slot extending transversely to the aforesaid slots. This makes it possible to slide manure present in the slots in the direction of the transverse slot by means of a so-called manure scraper, so that the manure can subsequently be deposited into the manure pit via the transverse slot. A drawback of the known slotted floor is the fact that the floor becomes slippery, which may lead to animals losing their footing and possibly injuring themselves.

To obviate the problem of animals losing their footing on the known slotted floor, the surface of the floor is currently usually provided with studs. A drawback of said studs, however, is the fact that they wear off, so that their effect is lost. Another drawback of the studs is that the aforesaid manure scraper cannot be used with optimum efficiency.

The object of the invention is to obviate the drawbacks of the prior art, i.e. to provide a floor element for a stable floor for cattle which is low-maintenance, easy and efficient to clean, easy to install and to remove and which provides a good grip for cattle moving around thereon, wherein the emission of ammonia is reduced under all circumstances.

In order to accomplish that object, a stable according to claim 1 is proposed. In other words, the material is compressible under loads exerted by cattle moving around on the floor element. More in particular, a flexible and/or elastically deformable material is used. As the floor elements are detachably placed on an existing stable floor, the advantage is that the floor is easy to install and to remove. The phrase "existing floor" is understood to mean any existing or newly constructed stable floor, such as a grated floor, a slotted floor or a flat concrete floor.

The manure scraper and the projections are preferably made of a material selected from the group consisting of metal (preferably steel), plastic and rubber. Such a device has the advantage that the floor can be cleaned in a simple and efficient manner without causing damage to the floor elements.

Dutch patent publication no. 8900860 (Beimers) relates to a separate plat or mat (see page 1 lines 1 through 4 and claims 1 through 8 thereof) to be placed on surfaces plashed with water, such as near swimming pools (see page 1 line 6 thereof), and having draining properties (see page 1 line 14 thereof) . Hence, this prior art document teaches a single anti-slippery plat or mat for balconies, swimming pools and the like, as shown in the figures thereof.

United States patent document no. 2004/0025461 discloses a stable with a floor element, wherein the floor element comprises an anti-slip and elastic material compressible under loads exerted by cattle moving around on the floor element, wherein the floor element is provided with a profile made up of longitudinally extending parallel slots, said stable comprising a manure scraper provided with projections extending into the slots, so that the manure scraper can freely move of the entire stable floor.

In a preferred embodiment of a stable element according to the invention, the compressible material is rubber. Rubber has the advantage that it has a lower roughness than concrete, so that the build-up of urease activity is lower and the emission of ammonia is reduced.

In another preferred embodiment of a stable according to the invention, the slots are provided with holes, which holes preferably widen in downward direction relative to the upper surface. This preferred embodiment has the advantage that when it is placed on a grated floor, the holes will open into the grate openings of the great floor, so that the manure cannot fall through the holes into a manure pit present thereunder. An additional advantage in the situation in which holes widen in downward direction is that the ammonia is confined within the manure pit, as it were, which leads to a further ammonia reduction.

In another preferred embodiment of a stable according to the invention, the flap valve is provided with spacers which form a chink between the flap valve and the manure pit in the closed position of the flap valve.

The invention will now be explained in more detail with reference to figures illustrated in the drawing, in which:
- Figure 1 is a perspective view of a stable for cattle comprising floor elements according to the invention;
- Figure 2 is a perspective view of a floor element according to the invention;
- Figure 3 is a perspective view of a floor element according to a preferred embodiment of the invention; and
- Figure 4 is a perspective view of a flap valve according to the invention.

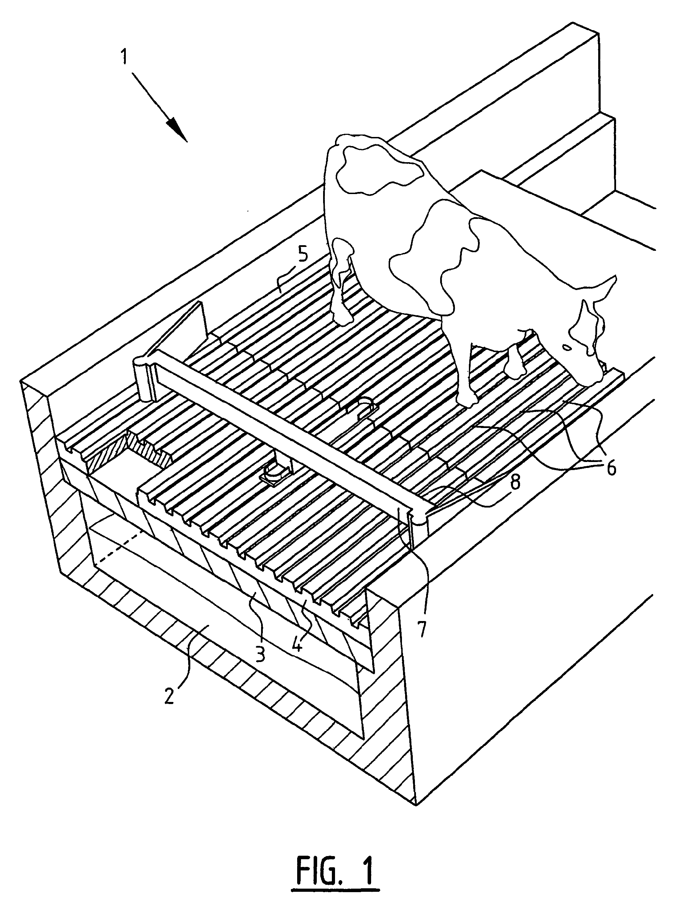

Figure 1 shows a stable 1 for cattle, comprising a manure pit 2 and a floor 3 of reinforced concrete, which is supported on the upright side walls of the manure pit 2 present thereunder. The floor 3 may be any existing stable floor, for example a flat inclined or non-inclined floor, a grated floor or a slotted floor. The stable 1 does not necessarily have to comprise a cellar, a manure discharging facility may be provided at the end of the stable 1. Detachable floor elements 4, 5 are placed on the floor 3, which elements are provided with slots 6 extending in the longitudinal direction. The thickness of the floor elements 4,5 is about 4 cm, in which slots being about 2.5 cm wide and deep are provided with a centre-to-centre distance of about 16 cm.

To obtain a good grip for the cattle moving around on the stable floor, the floor elements 4,5 are made of a compressible material, which material preferably has a minimum compressibility of 3 mm under a load of 2000N/75 cm² and a permanent elasticity. The compressible material is preferably (recycled) rubber. An additional advantage of the use of rubber floor elements is that the rubber has a lower roughness than concrete, so that the build-up of urease activity will be lower and the emission of ammonia will be reduced. The slots 6 of the floor elements 4,5 are in line, so that the manure scraper 7 provided with projections 8 extending into the slots 6 can freely move over the entire stable floor. As a result of the action of the manure scraper 7, the manure is moved to one end of the stable and discharged into the manure pit at that location. The manure scraper 7 and the projections 8 are preferably made of rubber or plastic having good mopping / cleaning properties, so that the manure and the urine can be properly removed without causing damage to the floor elements 4,5.

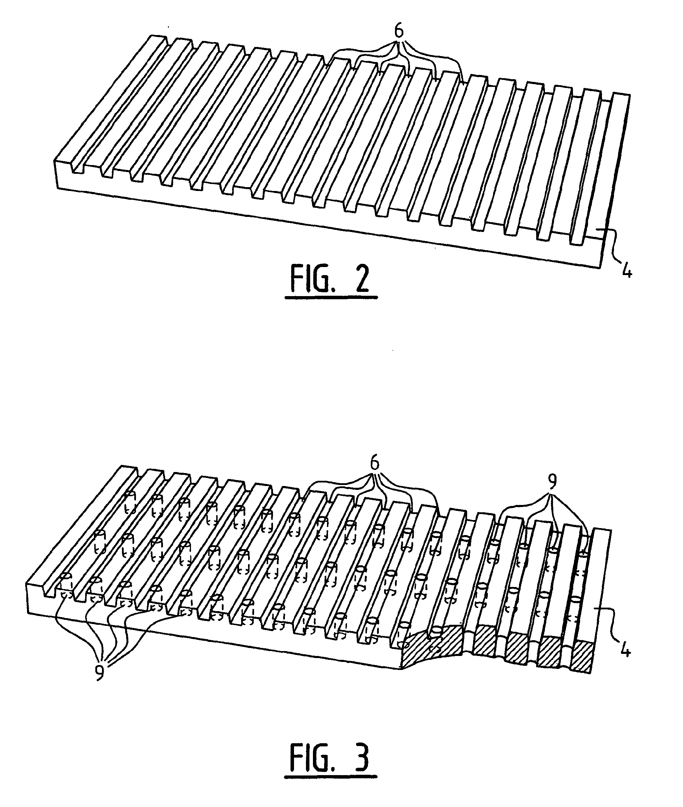

Figure 2 shows a floor element 4 according to the invention, in which the slots 6 can be clearly distinguished.

Figure 3 shows a floor element 4 according to a preferred embodiment of the invention, which shows that holes 9 are provided in the slots 6, which holes open into the grate openings of a grated floor. Manure present in the slots 6 can find its way into the manure pit 2 via the holes 9 under the influence of the forward and backward movement of the manure scraper 7. At the time of the production of the floor elements 4, 5, the shape and the dimensions of the holes 9 have been determined so that the manure cannot obstruct the holes 8 and that the emission of ammonia through said holes is strongly reduced. To reduce the emission of ammonia even further, the holes 8 widen in the direction of the manure pit 2, i.e. downwards relative to the upper surface, so that the ammonia is confined in the manure pit, as it were. It is noted that such a floor element, in which the slots 6 are provided with holes 9, is only suitable for placement on a grated floor or a slotted floor in which such holes are likewise provided. If desired, holes 9 can be formed upon placement of the floor elements 4,5 on a grated floor or a slotted floor.

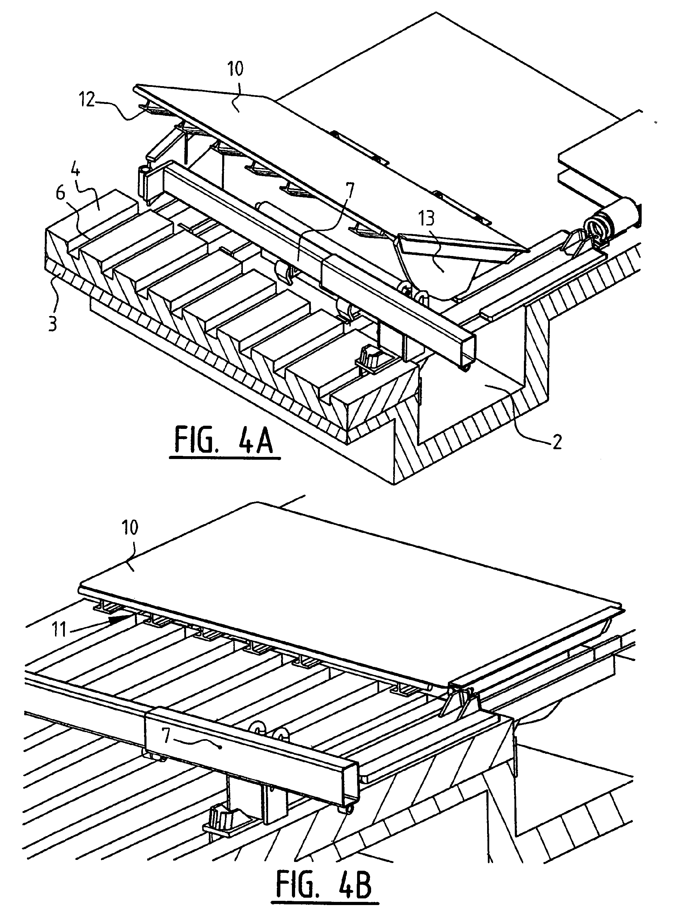

Figure 4 is a view of a flap valve 10 according to the invention, which shows that the flap valve 10 closes the manure pit 2 but for a chink 11 in the closed position thereof, which chink is formed by the spacers 12, which rest on the floor element 4. The advantage of closing the manure pit is that this makes it possible to achieve a further reduction of the ammonia emission. When the manure scraper 7 approaches, the flap valve 10 is lifted by the manure scraper 7 via the tilting element 13, whereupon the manure is discharged. The advantage of the chink 11 is that the first manure can be shoved into the manure pit 2 via the chink 11 when the manure scraper 7 approaches but before the flap valve 10 is lifted, so that the manure will not move over the flap valve 10. After the manure has been discharged, the manure scraper 7 automatically moves back and the flap valve 10 returns to its closed position.

It is noted that the invention is not limited to the embodiment discussed in the foregoing, but that it also extends to other variants that fall within the scope of the appended claims. Thus the skilled person will appreciate that the manure pit need not be situated directly under the present stable floor, but that it may also be located some distance away therefrom, where the manure is discharged by the manure scraper. It will also be understood that the dimensions of the floor elements mentioned herein are only given by way of illustration, and that other dimensions may be used. Also the dimension and the shape of the slots may be adapted, the width of the slots may for example be smaller at the surface and increase in downward direction relative to the upper surface, in the direction of the manure pit, so as to achieve a further reduction of the ammonia emission, or the slots may have a circular, triangular or the like cross-section.

## Claims

1. A stable (1) comprising an existing stable floor (3) and at least two floor elements (4,5) abutting against one another and detachably placed on said stable floor (3), wherein each floor element (4,5) is made of a material compressible under loads exerted by cattle moving around on the floor elements (4,5), wherein each floor element (4,5) is provided with a profile at least substantially made up of longitudinally extending parallel slots (6), such that the slots (6) of the adjacent floor elements (4,5) are in line, said stable (1) comprising a manure scraper (7) provided with projections (8) extending into the slots (6), so that the manure scraper (7) can freely move over the entire stable floor (3), wherein the stable (1) comprises a manure pit (2) situated under the stable floor (3), wherein the manure pit (2) comprises a flap valve (10), and wherein said flap valve (10) closes the manure pit (2) in the closed position thereof, wherein the flap valve (10) is provided with a lifting element, wherein the manure scraper (7) is designed for opening the flap valve (10) by means of said lifting element (13), wherein the manure scraper (7) is further designed for discharging the manure into the manure pit (2), and wherein the manure scraper (7) is further designed for closing the flap valve (10) after the manure has been discharged.

2. A stable (1) according to claim 1, wherein the compressible material is rubber.

3. A stable (1) according to claim 1 or 2, wherein the slots (6) are provided with holes (9).

4. A stable (1) according to claim 3, wherein said holes (9) widen in downward direction relative to said upper surface.

5. A stable (1) system according to any of the preceding claims 1 through 4, wherein the manure scraper (7) and the projections (8) are made of a material selected from the group consisting of metal, plastic and rubber.

6. A stable (1) according to any of the preceding claims 1 through 5, wherein the flap valve (10) is provided with spacers (12) which form a chink (11) between the flap valve (10) and the manure pit (2) in the closed position of the flap valve (10).

## Patentansprüche

1. Stall (1), umfassend einen existierenden Stallboden (3) und wenigstens zwei Bodenelemente (4, 5), die aneinanderstoßen und herausnehmbar auf dem Stallboden (3) platziert sind, wobei jedes Bodenelement (4, 5) aus einem Material besteht, das unter Belastungen komprimierbar ist, die von Vieh ausgeübt werden, das sich auf den Bodenelementen (4, 5) herumbewegt, wobei jedes Bodenelement (4, 5) mit einem Profil versehen ist, das wenigstens im wesentlichen aus sich in Längsrichtung erstreckenden parallelen Schlitzen (6) besteht, so dass die Schlitze (6) der benachbarten Bodenelemente (4, 5) fluchten, wobei der Stall (1) einen Dungschaber (7) umfasst, der mit Vorsprüngen (8) versehen ist, die sich in die Schlitze (6) hinein erstrecken, so dass der Dungschaber (7) sich frei über den gesamten Stallboden (3) bewegen kann, wobei der Stall (1) eine Dunggrube (2) umfasst, die unter dem Stallboden (3) angeordnet ist, wobei die Dunggrube (2) ein Klappenventil (10) umfasst und wobei das Klappenventil (10) die Dunggrube (2) in der geschlossenen Position derselben verschließt, wobei das Klappenventil (10) mit einem Hebeelement versehen ist, wobei der Dungschaber (7) so konstruiert ist, dass er das Klappenventil (10) mittels des Hebeelements (13) öffnet, wobei der Dungschaber (7) weiter so konstruiert ist, dass er den Dung in die Dunggrube (2) entsorgt, und wobei der Dungschaber (7) weiter so konstruiert ist, dass er das Klappenventil (10) verschließt, nachdem der Dung entsorgt worden ist.

2. Stall (1) nach Anspruch 1, wobei das komprimierbare Material Gummi ist.

3. Stall (1) nach Anspruch 1 oder 2, wobei die Schlitze (6) mit Löchern (9) versehen sind.

4. Stall (1) nach Anspruch 3, wobei die Löcher (9) nach unten hin relativ zur oberen Oberfläche erweitert sind.

5. Stall(1)-System nach einem der vorangehenden Ansprüche 1 bis 4, wobei der Dungschaber (7) und die Vorsprünge (8) aus einem Material bestehen, das ausgewählt ist aus der Gruppe, bestehend aus Metall, Kunststoff und Gummi.

6. Stall (1) nach einem der vorangehenden Ansprüche 1 bis 5, wobei das Klappenventil (10) mit Abstandshaltern (12) versehen ist, die einen Spalt (11) zwischen dem Klappenventil (10) und der Dunggrube (2) in der geschlossenen Position des Klappenventils (10) bilden.

## Revendications

1. Etable (1) comprenant un plancher d'étable (3) existant et au moins deux éléments de plancher (4, 5) jointifs et placés de façon détachable sur ledit plancher d'étable (3), chaque élément de plancher (4, 5) étant réalisé en un matériau compressible sous des efforts exercés par le bétail qui se déplace sur les éléments de plancher (4, 5), chaque élément de plancher (4, 5) étant doté d'un profilé constitué au moins sensiblement de fentes parallèles (6) s'étendant longitudinalement, de sorte que les fentes (6) des éléments de plancher (4, 5) adjacents sont alignées, ladite étable (1) comprenant un racleur de fumier (7) doté de projections (8) s'étendant jusque dans les fentes (6), de sorte que le racleur de fumier (7) peut se déplacer librement sur tout le plancher d'étable (3), l'étable (1) comprenant une fosse à fumier (2) située sous le plancher d'étable (3), la fosse à fumier (2) comprenant une trappe (10), et ladite trappe (10) fermant la fosse à fumier (2) lorsqu'elle est en position fermée, la trappe (10) étant dotée d'un élément de levage, le racleur de fumier (7) étant conçu pour ouvrir la trappe (10) au moyen de l'élément de levage (13), le racleur de fumier (7) étant en outre conçu pour évacuer le fumier dans la fosse à fumier (2), et le racleur de fumier (7) étant en outre conçu pour fermer la trappe (10) après que le fumier a été évacué.

2. Etable (1) selon la revendication 1, dans laquelle le matériau compressible est du caoutchouc.

3. Etable (1) selon la revendication 1 ou 2, dans laquelle les fentes (6) sont dotées de trous (9).

4. Etable (1) selon la revendication 3, dans laquelle lesdits trous (9) s'évasent vers le bas par rapport à ladite surface supérieure.

5. Système formant étable (1) selon l'une quelconque des revendications précédentes 1 à 4, dans lequel le racleur de fumier (7) et les projections (8) sont réalisés en un matériau sélectionné dans le groupe constitué de métal, de matière plastique et de caoutchouc.

6. Etable (1) selon l'une quelconque des revendications précédentes 1 à 5, dans laquelle la trappe (10) est dotée d'entretoises (12) qui forment un entrebâillement (11) entre la trappe (10) et la fosse à fumier (2) lorsque la trappe (10) est en position fermée.
